# EUROPEAN PATENT SPECIFICATION

(11) **EP 4 253 200 B1**
(45) Date of publication and mention of the grant of the patent: **05.06.2024**
(21) Application number: 23161721.8
(22) Date of filing: 14.03.2023
(51) Int. Cl.: B62D 25/08

(54) **VEHICLE AND COWL TOP ASSEMBLY THEREOF**
FAHRZEUG UND STIRNWANDOBERSEITE-ANORDNUNG DAFÜR
VÉHICULE ET SON AGENCEMENT DE PAROI FRONTALE DE SUPPORT

(30) Priority: 31.03.2022 CN 202210344119
(43) Date of publication of application: 04.10.2023
(73) Proprietor: Nio Technology (Anhui) Co., Ltd, Hefei City, Anhui 230601 (CN)
(72) Inventor: SHENG, Haorui, Shanghai, 201805 (CN); SHEN, Xuekai, Shanghai, 201805 (CN)
(74) Representative: Vossius & Partner Patentanwälte Rechtsanwälte mbB

(56) References cited:
- DE-A1-102010 005 834
- US-A1- 2009 066 116
- US-B2- 7 546 893
- US-B2- 7 552 964

## Description

### Technical Field

The disclosure relates to the technical field of vehicles, and in particular provides a vehicle and cowl top assembly thereof.

### Background Art

As passenger vehicles become increasingly popular in China, the probability of traffic accidents is increasing year by year. To protect the safety of pedestrians, pedestrian protection will be included in mandatory test objectives in both C-NCAP (China New Car Assessment Program) and national standards in the coming years.

Traditional automobile factories often adopt active-ejecting bonnet technology to meet the latest pedestrian protection regulations to reduce injuries to pedestrians in collision accidents. Although the active-ejecting bonnet technology can effectively meet the regulatory requirements, it also poses risks such as high cost, long development cycle, and even false detonation.

Thus, a new technical solution is needed in the art to solve the above problems. US 7,546,893 B2 provides a front wall module for a motor vehicle. This front wall module includes a front wall outer part and a front wall inner part which are connected to each other to form a cavity construction with an outer casing. The front wall module integrates an additional beam connected to the front wall outer part in order to meet the safety demands. However, there is a need to develop new ways to solve the above problems.

### Summary

In order to solve the above problems, the invention is set forth in the appended set of claims 1-9.

When using the above technical solution, the cowl top assembly comprises a rear panel and a front panel structure, wherein the front panel structure comprises a first top panel, a first vertical panel, and a first bottom panel, and wherein a front edge of the first top panel and a front edge of the first bottom panel are respectively connected to an upper edge and a lower edge of the first vertical panel, and a rear edge of the first top panel and a rear edge of the first bottom panel are connected to the rear panel, so that a cavity is enclosed by the rear panel and the front panel structure; and first collapsing holes are formed in the first top panel, and second collapsing holes are formed in the first vertical panel. That is, the front panel structure is a structure with a substantially "C"-shaped longitudinal section, and the front panel structure with the substantially "C"-shaped longitudinal section is connected to the rear panel to enclose a cavity, the first collapsing holes are formed in the first top panel of the front panel structure, and the second collapsing holes are formed in the first vertical panel of the front panel structure.

With this arrangement, the first collapsing holes and the second collapsing holes cooperate with each other. In the process of a pedestrian-vehicle collision, when the pedestrian's head hits a front windshield of the vehicle, an impact force can be quickly transferred to the cowl top assembly, so that a rearward and obliquely downward acting force is exerted on the front panel structure by the windshield with a lower edge supported at a junction between the first top panel and the first vertical panel. The acting force is decomposed on the first top panel and the first vertical panel, and then the first top panel and the first vertical panel are quickly and effectively collapsed for deformation at the first collapsing holes and the second collapsing holes respectively, thereby reducing the impact force on the pedestrian's head and effectively reducing injuries to the pedestrian. In addition, according to the disclosure, the cowl top assembly of the vehicle not only uses less material, and has a lighter weight, a shorter development cycle, and a lower cost, but also has a higher torsional resistance, and ensures a good NVH (Noise, Vibration and Harshness) performance, thus optimizing the user experience.

In a second aspect, the disclosure further provides a vehicle, comprising a cowl top assembly of a vehicle according to any of the above technical solutions.

It should be noted that the vehicle has all the technical effects of the cowl top assembly of the vehicle described above, which will not be repeated here.

### Brief Description of the Drawings

Preferred embodiments of the invention are described below with reference to the accompanying drawings, in which:
FIG. 1 is an exploded view of a cowl top assembly of a vehicle according to an embodiment of the disclosure;
FIG. 2 is top view of the cowl top assembly of the vehicle according to an embodiment of the disclosure;
FIG. 3 is a front view of the cowl top assembly of the vehicle according to an embodiment of the disclosure;
FIG. 4 is a sectional view along line A-A in FIG. 3;
FIG. 5 is a sectional view along line B-B in FIG. 3;
FIG. 6 is an orientation diagram of a connection between the cowl top assembly of the vehicle and a Y-shaped support according to an embodiment of the disclosure;
FIG. 7 is an orientation diagram of a connection between the cowl top assembly of the vehicle and a drip rail assembly according to an embodiment of the disclosure; and
FIG. 8 is a rear view of the cowl top assembly of the vehicle according to an embodiment of the disclosure.

List of reference signs:
1. Rear panel; 2. Front panel structure; 21. First top panel; 211. First section; 212. Second section; 22. First vertical panel; 23. First bottom panel; 24. First collapsing hole; 25. Second collapsing hole; 3. First reinforcing support; 31. Second top panel; 32. Second vertical panel; 33. Second bottom panel; 34. First side panel; 4. Second reinforcing support; 41. Third vertical panel; 42. Third bottom panel; 43. Second side panel; 5. Third reinforcing support; 6. Y-shaped support; 7. Wiper bracket; 8. Drip rail assembly; 81. Instrument panel crossmember mounting hole; 82. Cable harness mounting stud; 83. Air conditioner mounting stud; 84. Interior trim mounting stud.

### Detailed Description of Embodiments

Firstly, it should be understood by those skilled in the art that embodiments described below are only for explaining the technical principles of the invention. For example, a vehicle of the disclosure may be an electric vehicle, a fuel vehicle, or a hybrid vehicle, etc.

It should be noted that, in the description of the disclosure, the terms that indicate the direction or positional relationship, such as "left", "right", "inner", and "outer", are based on the direction or positional relationship shown in the figures, which is merely for ease of description instead of indicating or implying that the device or element must have a particular orientation and be constructed and operated in a particular orientation.

In addition, the terms "front", "rear", and the like are all based on a front-to-rear direction of the vehicle after components are mounted on the vehicle, the "longitudinal" is based on the front-to-rear direction of the vehicle after components are mounted on the vehicle, and the "transverse" indicates a direction perpendicular to the longitudinal direction. In addition, the terms "first", "second", and "third" are for descriptive purposes only, and may not be interpreted as indicating or implying relative importance.

In addition, it should also be noted that, in the description of the disclosure, the terms "connect" should be interpreted in a broad sense unless explicitly defined and limited otherwise, which, for example, may mean a fixed connection, a detachable connection or an integral connection; may mean a mechanical connection or an electrical connection; or may mean a direct connection, an indirect connection by means of an intermediate medium, or internal communication between two elements. For those skilled in the art, the specific meaning of the above-mentioned terms in the disclosure can be interpreted according to the specific situation.

Based on the problems of long development cycle, high cost and even proneness to false detonation in the solution in which existing vehicles use active-ejecting bonnet technology to reduce injuries to pedestrians in collision accidents, the disclosure provides a cowl top assembly of a vehicle. The cowl top assembly comprises a rear panel and a front panel structure, wherein the front panel structure comprises a first top panel, a first vertical panel, and a first bottom panel, and wherein a front edge of the first top panel and a front edge of the first bottom panel are respectively connected to an upper edge and a lower edge of the first vertical panel, and a rear edge of the first top panel and a rear edge of the first bottom panel are connected to the rear panel, so that a cavity is enclosed by the rear panel and the front panel structure; and first collapsing holes are formed in the first top panel, and second collapsing holes are formed in the first vertical panel.

With this arrangement, the first collapsing holes and the second collapsing holes cooperate with each other. In the process of a pedestrian-vehicle collision, when the pedestrian's head hits a front windshield of the vehicle, an impact force can be quickly transferred to the cowl top assembly, so that a rearward and obliquely downward acting force is exerted on the front panel structure by the windshield with a lower edge supported at a junction between the first top panel and the first vertical panel. The acting force is decomposed on the first top panel and the first vertical panel, and then the first top panel and the first vertical panel are quickly and effectively collapsed for deformation at the first collapsing holes and the second collapsing holes respectively, thereby reducing the impact force on the pedestrian's head, effectively reducing injuries to the pedestrian, and solving the problems of long development cycle, high cost and even proneness to false detonation in the solution in which existing vehicles use active-ejecting bonnet technology to reduce injuries to pedestrians in collision accidents. In addition, according to the disclosure, the cowl top assembly of the vehicle not only uses less material, and has a lighter weight, a shorter development cycle, and a lower cost, but also has a higher torsional resistance, and ensures a good NVH performance.

Preferably, the first top panel, the first vertical panel, and the first bottom panel are integrally formed. With this arrangement, not only the manufacturing and assembly processes of parts are reduced, but also the front panel structure formed of the first top panel, the first vertical panel and the first bottom panel has a stronger torsional resistance after being connected to the rear panel, thereby further improving the NVH performance.

Preferably, the first top panel is shaped to be bent upwards along a transverse bending line in the middle of the first top panel, the first top panel is divided into a first section and a second section that are distributed front to rear, and the first collapsing holes are distributed in the second section. With this arrangement, on the one hand, the strength and stiffness of the first top panel are increased, further increasing the torsional resistance; on the other hand, the first section tilts downwards toward the front and the second section tilts downwards toward the rear, so that when the windshield with a lower edge supported at a junction between of the first section and the first vertical panel is impacted, there is a smaller angle between a rearward and obliquely downward acting force exerted on the front panel structure by the windshield and the second section, making it easier for the first collapsing holes distributed in the second section to collapse for deformation, thereby further reducing the acting force of the windshield on the pedestrians and reducing injuries to the pedestrians in pedestrian-vehicle collision accidents.

Preferably, the first collapsing hole has a transverse dimension greater than a front-to-rear dimension thereof, and/or the second collapsing hole has a transverse dimension greater than a front-to-rear dimension thereof.

With this arrangement, it is more conducive to collapsing of the cowl top assembly so as to reduce injuries to the pedestrian when the pedestrian hits the windshield of the vehicle.

Preferably, a first reinforcing support is provided in the cavity at a longitudinal central plane, and the first reinforcing support comprises a second top panel, a second vertical panel, a second bottom panel, and two first side panels, wherein a front edge of the second top panel and a front edge of the second bottom panel are respectively connected to an upper edge and a lower edge of the second vertical panel, and each of the two first side panels is connected to a side edge of each of the second top panel, the second vertical panel and the second bottom panel; and the second vertical panel abuts against the first vertical panel, the second bottom panel abuts against the first bottom panel, and a rear edge of the second top panel, a rear edge of the second bottom panel, and/or rear edges of the first side panels abut against the rear panel.

During use of the vehicle, the risk of torsional deformation of the cowl top assembly is greatest at the longitudinal central plane. With this arrangement, the torsional strength of the cowl top assembly can be further increased, and the NVH performance can be improved.

Preferably, the second reinforcing support comprises a third vertical panel, a third bottom panel, and two second side panels, wherein a front edge of the third bottom panel is connected to a lower edge of the third vertical panel, and each of the two second side panels is connected to a side edge of each of the third vertical panel and the third bottom panel; and the third vertical panel abuts against the first vertical panel, and a rear edge of the third bottom panel and/or rear edges of the second side panels abut against the rear panel.

With this arrangement, the overall torsional strength of the cowl top assembly is further increased.

Preferably, the cowl top assembly further comprises a third reinforcing support, wherein a first end of the third reinforcing support is connected to the first bottom panel at the longitudinal central plane, and a second end of the third reinforcing support is connected to a shock absorber of the vehicle by means of a Y-shaped support; and the third reinforcing support is a cast part.

With this arrangement, the torsional strength of the cowl top assembly is further increased, and the NVH performance is improved. In addition, without affecting the performance of the cowl top assembly to collapse to reduce injuries to the pedestrian, the risk of injury to the driver and passengers of the vehicle due to a huge deformation of the cowl top assembly toward the interior of the vehicle as a whole can be reduced, thereby further improving safety performance of the vehicle.

Preferably, a drip rail assembly of the vehicle is connected to the first vertical panel, and/or an air conditioner bracket, a cable harness mounting bracket, a dashboard bracket and/or an interior trim mounting bracket of the vehicle are connected to the rear panel.

With this arrangement, there is no need to provide separate support structures for the drip rail assembly, the air conditioner bracket, the cable harness mounting bracket, the dashboard bracket, and/or the interior trim mounting bracket of the vehicle, so that the number of parts is reduced, and the manufacturing and assembly processes are simplified, thereby further lowering the manufacturing cost of the entire vehicle. In addition, the drip rail assembly, the air conditioner bracket, the cable harness mounting bracket, the dashboard bracket and/or the interior trim mounting bracket of the vehicle are connected to the cowl top assembly, so that a multi-point restraint is formed on the cowl top assembly without affecting the performance of the cowl top assembly to collapse to reduce injuries to the pedestrian, further increasing the torsional resistance of the cowl top assembly and improving the NVH performance.

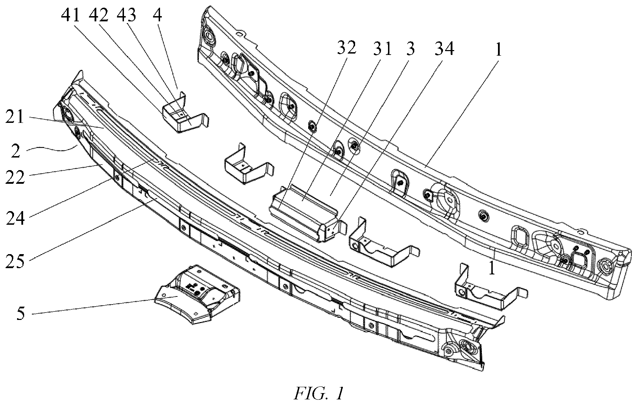

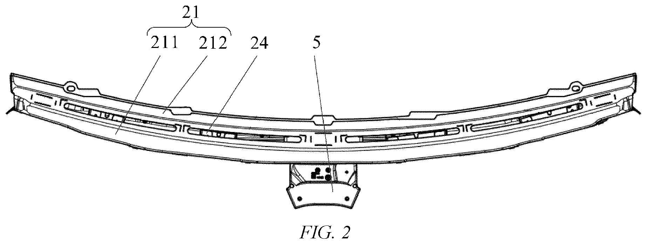

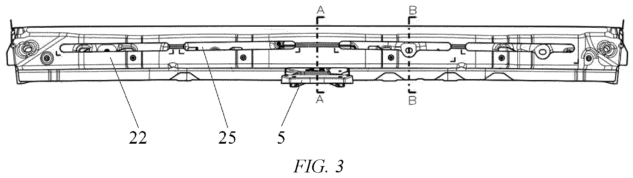

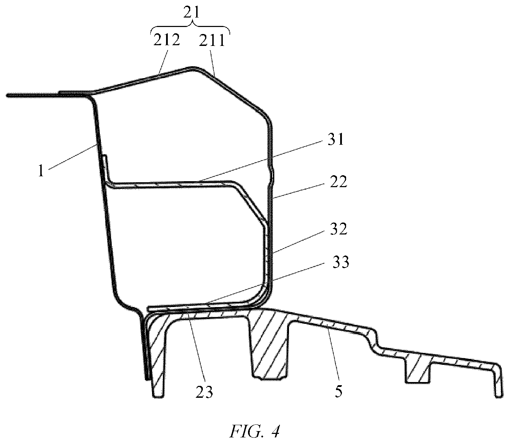

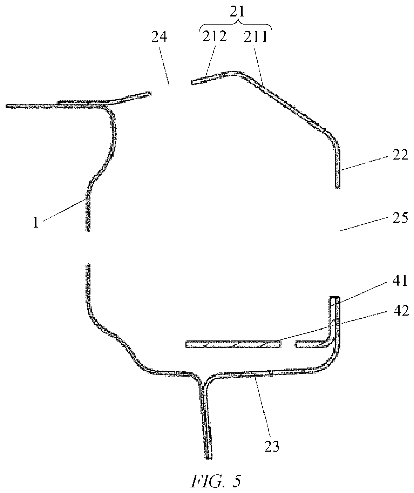

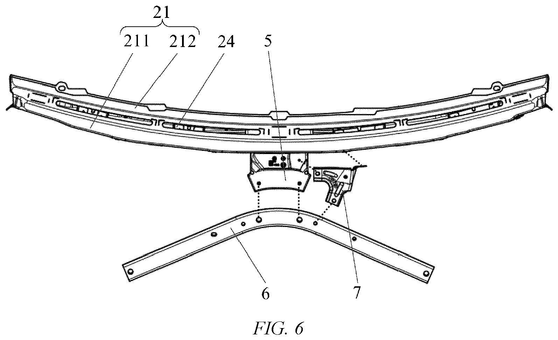

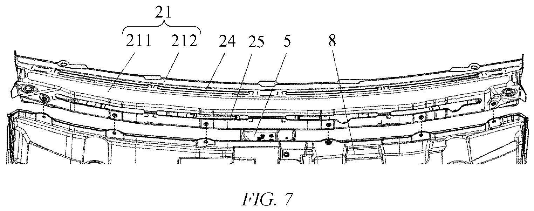

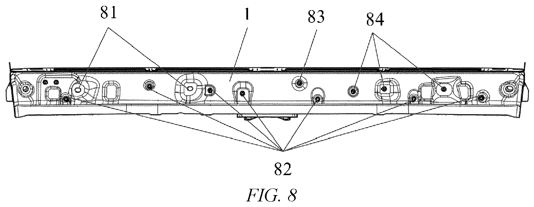

The cowl top assembly of the vehicle according to the disclosure is described below with reference to FIGS. 1 to 8. FIG. 1 is an exploded view of a cowl top assembly of a vehicle according to an embodiment of the disclosure; FIG. 2 is top view of the cowl top assembly of the vehicle according to an embodiment of the disclosure; FIG. 3 is a front view of the cowl top assembly of the vehicle according to an embodiment of the disclosure; FIG. 4 is a sectional view along line A-A in FIG. 3; FIG. 5 is a sectional view along line B-B in FIG. 3; FIG. 6 is an orientation diagram of a connection between the cowl top assembly of the vehicle and a Y-shaped support according to an embodiment of the disclosure; FIG. 7 is an orientation diagram of a connection between the cowl top assembly of the vehicle and a drip rail assembly according to an embodiment of the disclosure; and FIG. 8 is a rear view of the cowl top assembly of the vehicle according to an embodiment of the disclosure.

As shown in FIGS. 1 to 5, the cowl top assembly of the vehicle comprises a rear panel 1 and a front panel structure 2. The front panel structure 2 comprises a first top panel 21, a first vertical panel 22, and a first bottom panel 23 that are integrally formed. A front edge of the first top panel 21 and a front edge of the first bottom panel 23 are respectively connected to an upper edge and a lower edge of the first vertical panel 22, that is, the front panel structure is a structure with a substantially "C"-shaped longitudinal section, and a rear edge of the first top panel 21 and a rear edge of the first bottom panel 23 are connected to the rear panel 1, so that a cavity is enclosed by the rear panel 1 and the front panel structure 2.

The first top panel 21 is shaped to be bent upwards along a transverse bending line in the middle of the first top panel, and the first top panel 21 is divided into a first section 211 and a second section 212 that are distributed front to rear. Four first collapsing holes 24 are formed in the second section 212, and four second collapsing holes 25 are formed in the first vertical panel 22. Both the first collapsing holes 24 and the second collapsing holes 25 are elongated holes. The four first collapsing holes 24 are distributed in the second section 212 in a width direction of the vehicle, and the four second collapsing holes 25 are distributed in the first vertical panel 22 in the width direction of the vehicle.

A first reinforcing support 3 is provided in the cavity at a longitudinal central plane, and the first reinforcing support 3 comprises a second top panel 31, a second vertical panel 32, a second bottom panel 33, and two first side panels 34. A front edge of the second top panel 31 and a front edge of the second bottom panel 33 are respectively connected to an upper edge and a lower edge of the second vertical panel 32, and each of the two first side panels 34 is connected to a side edge of each of the second top panel 31, the second vertical panel 32 and the second bottom panel 33; and the second vertical panel 32 abuts against the first vertical panel 22, the second bottom panel 33 abuts against the first bottom panel 23, and a rear edge of the second top panel 31 and rear edges of the first side panels 34 abut against the rear panel 1. Four second reinforcing supports 4 are also provided in the cavity. The four second reinforcing supports 4 are distributed in the width direction of the vehicle and are uniformly distributed on two sides of the first reinforcing support 3. The second reinforcing support 4 comprises a third vertical panel 41, a third bottom panel 42, and two second side panels 43. A front edge of the third bottom panel 42 is connected to a lower edge of the third vertical panel 41, and each of the two second side panels 43 is connected to a side edge of each of the third vertical panel 41 and the third bottom panel 42; and the third vertical panel 41 abuts against the first vertical panel 22, and rear edges of the second side panels 43 abut against the rear panel 1. As shown in FIG. 6, the cowl top assembly further comprises an aluminum-cast third reinforcing support 5. A first end of the third reinforcing support 5 is connected to the first bottom panel 23 at the longitudinal central plane, a second end of the third reinforcing support 5 is bolted to a Y-shaped support 6, and two branch ends of the Y-shaped support 6 are connected to two shock absorbers (not shown in the figure) of the vehicle.

As shown in FIG. 7, a drip rail assembly 8 of the vehicle is bolted to the first vertical panel 22 of the cowl top assembly. As shown in FIG. 8, an instrument panel crossmember mounting hole 81, a cable harness mounting stud 82, an air conditioner mounting stud 83, and an interior trim mounting stud 84 are provided on a rear side of the rear panel 1. In an installed state, an instrument panel crossmember of the vehicle is bolted to the instrument panel crossmember mounting hole 81, a cable harness bracket of the vehicle is fixed to the cable harness mounting stud 82, an air conditioner bracket of the vehicle is fixed to the air conditioner mounting stud 83, and an interior trim mounting bracket is fixed to the interior trim mounting stud 84.

Since the front panel structure 2 is configured as a structure with a substantially "C"-shaped longitudinal section, the front panel structure 2 with the substantially "C"-shaped longitudinal section is connected to the rear panel 1 to enclose a cavity, the first top panel 21 of the front panel structure 2 is shaped to be bent upwards along a transverse bending line in the middle of the first top panel, the first top panel 21 is divided into a first section 211 and a second section 212 that are distributed front to rear, a plurality of elongated first collapsing holes 24 distributed in the width direction of the vehicle are formed in the second section 212, and a plurality of elongated second collapsing holes 25 distributed in the width direction of the vehicle are formed in the first vertical panel 22 of the front panel structure 2, injuries to the pedestrians in pedestrian-vehicle collision accidents are effectively reduced. Specifically, in the process of a pedestrian-vehicle collision, when the pedestrian's head hits a front windshield of the vehicle, an impact force can be quickly transferred to the cowl top assembly, so that a rearward and obliquely downward acting force is exerted on the front panel structure 2 by the windshield with a lower edge supported at a junction between the first top panel 21 and the first vertical panel 22. The acting force is decomposed on the first top panel 21 and the first vertical panel 22, and then the first top panel 21 and the first vertical panel 22 are quickly and effectively collapsed for deformation at the first collapsing holes 24 and the second collapsing holes 25 respectively, thereby reducing the impact force on the pedestrian's head and effectively reducing injuries to the pedestrian. In addition, the cowl top assembly not only uses less material, and has a lighter weight, a short development cycle, and a lower cost, but also has a higher torsional resistance, and ensures a good NVH performance.

With the provision of the first reinforcing support 3, the second reinforcing supports 4 and the third reinforcing support 5, the torsional strength of the cowl top assembly is further increased and the NVH performance is improved.

The drip rail assembly 8 of the vehicle is connected to the first vertical panel 22, and the air conditioner bracket, the cable harness mounting bracket, the dashboard bracket and the interior trim mounting bracket of the vehicle are connected to the rear panel 1, so that a multi-point restraint is formed on the cowl top assembly without affecting the performance of the cowl top assembly to collapse to reduce injuries to the pedestrian, further increasing the torsional resistance of the cowl top assembly and improving the NVH performance. In addition, there is no need to provide separate support structures for the drip rail assembly 8, the air conditioner bracket, the cable harness mounting bracket, the dashboard bracket and/or the interior trim mounting bracket of the vehicle, so that the number of parts is reduced, the manufacturing and assembly processes are simplified, thereby further lowering the manufacturing cost of the entire vehicle.

It should be noted that four first collapsing holes 24 and four second collapsing holes 25 are provided, which is only a specific configuration and may be adjusted in a practical application so as to be adapted to different application scenarios. For example, two, three, five or more first collapsing holes 24 and two, three, five or more second collapsing holes 25 are provided. The number of first collapsing holes 24 and the number of second collapsing holes 25 may be the same or different. It is a preferred way to configure the first collapsing holes 24 and the second collapsing holes 25 as elongated holes, which may be adjusted in a practical application so as to be adapted to different application scenarios. For example, the first collapsing hole 24 may be a rectangular hole, an elliptical hole or another hole with a transverse dimension greater than a front-to-rear dimension, or a round hole, a square hole or other types of holes; and the second collapsing hole 25 may be a rectangular hole, an elliptical hole or another hole with a transverse dimension greater than a front-to-rear dimension, or a round hole, a square hole or other types of holes; and the first collapsing holes 24 and the second collapsing holes 25 may be the same or different in shape.

In addition, the first reinforcing support 3 may be configured in such a way that the rear edge of the second top panel 31, a rear edge of the second bottom panel 33 and the rear edges of the first side panels 34 all abut against the rear panel 1, or that one of the rear edge of the second top panel 31, the rear edge of the second bottom panel 33 and the rear edges of the first side panels 34 abuts against the rear panel 1. The second reinforcing support 4 may be configured in such a way that a rear edge of the second bottom panel 42 and a rear edge of the second side panel 43 both abut against the rear panel 1, or that only the rear edge of the second bottom panel 42 abuts against the rear panel 1.

In another feasible embodiment, the first top panel 21, the first vertical panel 22 and the first bottom panel 23 may also be separately formed and then connected together.

In another aspect, the disclosure further provides a vehicle, comprising a cowl top assembly according to any of the above embodiments. It should be noted that the vehicle may be an electric vehicle, a fuel vehicle, or a hybrid vehicle, etc.

Heretofore, the technical solutions of the disclosure have been described with reference to the preferred embodiments shown in the accompanying drawings. However, those skilled in the art can readily understand that the scope of protection of the disclosure is apparently not limited to these specific embodiments.

The invention is defined by the scope of the appended claims.

## Claims

1. A cowl top assembly of a vehicle, comprising a rear panel (1) and a front panel structure (2), wherein
the front panel structure (2) comprises a first top panel (21), a first vertical panel (22), and a first bottom panel (23), and wherein a front edge of the first top panel (21) and a front edge of the first bottom panel (23) are respectively connected to an upper edge and a lower edge of the first vertical panel (22), and a rear edge of the first top panel (21) and a rear edge of the first bottom panel (23) are connected to the rear panel (1), so that a cavity is enclosed by the rear panel (1) and the front panel structure (2), and
first collapsing holes (24) are formed in the first top panel (21), and second collapsing holes (25) are formed in the first vertical panel (22),
**characterized in that** a first reinforcing support (3) is provided in the cavity at a longitudinal central plane, and the first reinforcing support (3) comprises a second top panel (31), a second vertical panel (32), a second bottom panel (33), and two first side panels (34),
wherein a front edge of the second top panel (31) and a front edge of the second bottom panel (33) are respectively connected to an upper edge and a lower edge of the second vertical panel (32), and each of the two first side panels (34) is connected to a side edge of each of the second top panel (31), the second vertical panel (32) and the second bottom panel (33), and
wherein the second vertical panel (32) abuts against the first vertical panel (22), the second bottom panel (33) abuts against the first bottom panel (23), and a rear edge of the second top panel (31), a rear edge of the second bottom panel (33), and/or rear edges of the first side panels (34) abut against the rear panel (1).

2. The cowl top assembly according to claim 1, wherein the first top panel (21), the first vertical panel (22), and the first bottom panel (23) are integrally formed.

3. The cowl top assembly according to claim 1 or 2, wherein the first top panel (21) is shaped to be bent upwards along a transverse bending line in the middle of the first top panel, the first top panel is divided into a first section (211) and a second section (212) that are distributed front to rear, and the first collapsing holes (24) are distributed in the second section (212).

4. The cowl top assembly according to any one of claims 1 to 3, wherein the first collapsing holes (211) and/or the second collapsing holes (212) each have a transverse dimension greater than a front-to-rear dimension thereof.

5. The cowl top assembly according to any one of claims 1 to 4, wherein a plurality of second reinforcing supports (4) are also provided in the cavity, the plurality of second reinforcing supports (4) being distributed in a width direction of the vehicle and uniformly distributed on two sides of the first reinforcing support (3).

6. The cowl top assembly according to claim 5, wherein the second reinforcing support (4) comprises a third vertical panel (41), a third bottom panel (42), and two second side panels (43), and wherein a front edge of the third bottom panel (42) is connected to a lower edge of the third vertical panel (41), and each of the two second side panels (43) is connected to a side edge of each of the third vertical panel (41) and the third bottom panel (42), and
the third vertical panel (41) abuts against the first vertical panel (22), and a rear edge of the third bottom panel (42) and/or rear edges of the second side panels (43) abut against the rear panel.

7. The cowl top assembly according to claim 5 or 6, wherein the cowl top assembly further comprises a third reinforcing support (5), and wherein a first end of the third reinforcing support (5) is connected to the first bottom panel (23) at the longitudinal central plane, and a second end of the third reinforcing support (5) is connected to a shock absorber of the vehicle by means of a Y-shaped support (6); and
the third reinforcing support (5) is a cast part.

8. The cowl top assembly according to any one of claims 5 to 7, wherein a drip rail assembly (8) of the vehicle is connected to the first vertical panel (22), and/or
an air conditioner bracket, a cable harness mounting bracket, a dashboard bracket and/or an interior trim mounting bracket of the vehicle are connected to the rear panel.

9. A vehicle, comprising a cowl top assembly of a vehicle according to any one of claims 1 to 8.

## Patentansprüche

1. Verkleidungsoberteil für ein Fahrzeug, aufweisend eine Rückwand (1) und eine Vorderwandstruktur (2), wobei
die Vorderwandstruktur (2) eine erste obere Platte (21), eine erste vertikale Platte (22) und eine erste untere Platte (23) aufweist, und wobei eine Vorderkante der ersten oberen Platte (21) und eine Vorderkante der ersten unteren Platte (23) mit einer oberen Kante bzw. einer unteren Kante der ersten vertikalen Platte (22) verbunden sind und wobei eine Hinterkante der ersten oberen Platte (21) und eine Hinterkante der ersten unteren Platte (23) mit der Rückwand (1) verbunden sind, sodass ein Hohlraum durch die Rückwand (1) und die Vorderwandstruktur (2) eingeschlossen ist, und
erste Einfalllöcher (24) in der ersten oberen Platte (21) gebildet sind und zweite Einfalllöcher (25) in der ersten vertikalen Platte (22) gebildet sind,
**dadurch gekennzeichnet, dass** ein erster Verstärkungsträger (3) im Hohlraum an einer längs verlaufenden mittleren Ebene bereitgestellt ist und dass der erste Verstärkungsträger (3) eine zweite obere Platte (31), eine zweite vertikale Platte (32), eine zweite untere Platte (33) und zwei erste seitliche Platten (34) aufweist,
wobei eine Vorderkante der zweiten oberen Platte (31) und eine Vorderkante der zweiten unteren Platte (33) mit einer oberen Kante bzw. einer unteren Kante der zweiten vertikalen Platte (32) verbunden sind und wobei jede der zwei ersten seitlichen Platten (34) mit jeweils einer seitlichen Kante der zweiten oberen Platte (31), der zweiten vertikalen Platte (32) und der zweiten unteren Platte (33) verbunden ist, und
wobei die zweite vertikale Platte (32) an die erste vertikale Platte (22) grenzt, die zweite untere Platte (33) an die erste untere Platte (23) grenzt und eine Hinterkante der zweiten oberen Platte (31), eine Hinterkante der zweiten unteren Platte (33) und/oder Hinterkanten der ersten seitlichen Platten (34) an die Rückwand (1) grenzen.

2. Verkleidungsoberteil nach Anspruch 1, wobei die erste obere Platte (21), die erste vertikale Platte (22) und die erste untere Platte (23) integral ausgebildet sind.

3. Verkleidungsoberteil nach Anspruch 1 oder 2, wobei die erste obere Platte (21) geformt ist, um entlang einer quer verlaufenden Biegelinie in der Mitte der ersten oberen Platte nach oben gebogen zu sein, wobei die erste obere Platte in einen ersten Abschnitt (211) und einen zweiten Abschnitt (212) geteilt ist, die von vorn nach hinten verteilt sind, und wobei die ersten Einfalllöcher (24) im zweiten Abschnitt (212) verteilt sind.

4. Verkleidungsoberteil nach einem der Ansprüche 1 bis 3, wobei die ersten Einfalllöcher (211) und/oder die zweiten Einfalllöcher (212) jeweils eine quer verlaufende Abmessung aufweisen, die größer als eine Vorder-zu-Hinter-Abmessung davon ist.

5. Verkleidungsoberteil nach einem der Ansprüche 1 bis 4, wobei mehrere zweite Verstärkungsträger (4) ebenfalls in dem Hohlraum bereitgestellt sind, wobei die mehreren zweiten Verstärkungsträger (4) in einer Breitenrichtung des Fahrzeugs verteilt sind und auf zwei Seiten des ersten Verstärkungsträgers (3) gleichförmig verteilt sind.

6. Verkleidungsoberteil nach Anspruch 5, wobei der zweite Verstärkungsträger (4) eine dritte vertikale Platte (41), eine dritte untere Platte (42) und zwei zweite seitliche Platten (43) aufweist und wobei eine Vorderkante der dritten unteren Platte (42) mit einer unteren Kante der dritten vertikalen Platte (41) verbunden ist, und wobei jede der zwei zweiten seitlichen Platten (43) mit jeweils einer seitlichen Kante der dritten vertikalen Platte (41) und der dritten unteren Platte (42) verbunden ist, und
wobei die dritte vertikale Platte (41) an die erste vertikale Platte (22) grenzt und eine Hinterkante der dritten unteren Platte (42) und/oder Hinterkanten der zweiten seitlichen Platten (43) an die Rückwand grenzen.

7. Verkleidungsoberteil nach Anspruch 5 oder 6, wobei das Verkleidungsoberteil ferner einen dritten Verstärkungsträger (5) aufweist und wobei ein erstes Ende des dritten Verstärkungsträgers (5) mit der ersten unteren Platte (23) an der längs verlaufenden mittleren Ebene verbunden ist, und wobei ein zweites Ende des dritten Verstärkungsträgers (5) über eine Y-förmige Stütze (6) mit einem Stoßdämpfer des Fahrzeugs verbunden ist; und
wobei der dritte Verstärkungsträger (5) ein gegossenes Teil ist.

8. Verkleidungsoberteil nach einem der Ansprüche 5 bis 7, wobei eine Tropfschienenanordnung (8) des Fahrzeugs mit der ersten vertikalen Platte (22) verbunden ist, und/oder
wobei eine Klimaanlagenhalterung, eine Kabelbaummontagehalterung, eine Armaturenbretthalterung und/oder eine Innenverkleidungsmontagehalterung des Fahrzeugs mit der Rückwand verbunden sind.

9. Fahrzeug, aufweisend eine Verkleidungsoberteil eines Fahrzeugs nach einem der Ansprüche 1 bis 8.

## Revendications

1. Agencement de paroi frontale de support d'un véhicule, comprenant un panneau arrière (1) et une structure de panneau avant (2), dans lequel
la structure de panneau avant (2) comprend un premier panneau supérieur (21), un premier panneau vertical (22), et un premier panneau inférieur (23), et dans lequel un bord avant du premier panneau supérieur (21) et un bord avant du premier panneau inférieur (23) sont respectivement reliés à un bord supérieur et un bord inférieur du premier panneau vertical (22), et un bord arrière du premier panneau supérieur (21) et un bord arrière du premier panneau inférieur (23) sont reliés au panneau arrière (1), de sorte qu'une cavité est entourée par le panneau arrière (1) et la structure de panneau avant (2), et
des premiers trous d'affaissement (24) sont formés dans le premier panneau supérieur (21) et des seconds trous d'affaissement (25) sont formés dans le premier panneau vertical (22),
**caractérisé en ce qu'**un premier support de renfort (3) est placé dans la cavité à un plan central longitudinal, et le premier support de renfort (3) comprend un deuxième panneau supérieur (31), un deuxième panneau vertical (32), un deuxième panneau inférieur (33), et deux premiers panneaux latéraux (34),
dans lequel un bord avant du deuxième panneau supérieur (31) et un bord avant du deuxième panneau inférieur (33) sont respectivement reliés à un bord supérieur et un bord inférieur du deuxième panneau vertical (32), et chacun des deux premiers panneaux latéraux (34) est relié à un bord latéral de chacun du deuxième panneau supérieur (31), du deuxième panneau vertical (32) et du deuxième panneau inférieur (33), et
dans lequel le deuxième panneau vertical (32) vient en butée contre le premier panneau vertical (22), le deuxième panneau inférieur (33) vient en butée contre le premier panneau inférieur (23), et un bord arrière du deuxième panneau supérieur (31), un bord arrière du deuxième panneau inférieur (33), et/ou des bords arrière des premiers panneaux latéraux (34) viennent en butée contre le panneau arrière (1).

2. Agencement de paroi frontale de support selon la revendication 1, dans lequel le premier panneau supérieur (21), le premier panneau vertical (22), et le premier panneau inférieur (23) sont formés d'une seule pièce.

3. Agencement de paroi frontale de support selon la revendication 1 ou 2, dans lequel le premier panneau supérieur (21) est formé pour se plier vers le haut le long d'une ligne de pliage transversale au milieu du premier panneau supérieur, le premier panneau supérieur est divisé en une première section (211) et une seconde section (212) qui sont réparties de l'avant à l'arrière, et les premiers trous d'affaissement (24) sont répartis dans la seconde section (212).

4. Agencement de paroi frontale de support selon l'une quelconque des revendications 1 à 3, dans lequel les premiers trous d'affaissement (211) et/ou les seconds trous d'affaissement (212) présentent chacun une dimension transversale supérieure à leur dimension d'avant en arrière.

5. Agencement de paroi frontale de support selon l'une quelconque des revendications 1 à 4, dans lequel une pluralité de deuxièmes supports de renfort (4) sont également placés dans la cavité, la pluralité de deuxièmes supports de renfort (4) étant répartis dans le sens de la largeur du véhicule et répartis uniformément sur deux côtés du premier support de renfort (3).

6. Agencement de paroi frontale de support selon la revendication 5, dans lequel le deuxième support de renfort (4) comprend un troisième panneau vertical (41), un troisième panneau inférieur (42), et deux seconds panneaux latéraux (43), et dans lequel un bord avant du troisième panneau inférieur (42) est relié à un bord inférieur du troisième panneau vertical (41), et chacun des deux seconds panneaux latéraux (43) est relié à un bord latéral de chacun du troisième panneau vertical (41) et du troisième panneau inférieur (42), et
le troisième panneau vertical (41) vient en butée contre le premier panneau vertical (22), et un bord arrière du troisième panneau inférieur (42) et/ou des bords arrière des seconds panneaux latéraux (43) viennent en butée contre le panneau arrière.

7. Agencement de paroi frontale de support selon la revendication 5 ou 6, dans lequel l'agencement de paroi frontale de support comprend en outre un troisième support de renfort (5), et dans lequel une première extrémité du troisième support de renfort (5) est relié au premier panneau inférieur (23) au niveau du plan central longitudinal, et une seconde extrémité du troisième support de renfort (5) est reliée à un amortisseur de chocs du véhicule au moyen d'un support en forme de Y (6) ; et
le troisième support de renfort (5) est une pièce moulée.

8. Agencement de paroi frontale de support selon l'une quelconque des revendications 5 à 7, dans lequel un ensemble de gouttière (8) du véhicule est relié au premier panneau vertical (22), et/ou
un support de climatiseur, un support de montage de faisceau de câbles, un support de tableau de bord et/ou un support de montage d'habillage intérieur du véhicule sont reliés au panneau arrière.

9. Véhicule, comprenant un agencement de paroi frontale de support de véhicule selon l'une quelconque des revendications 1 à 8.
